(19) Europäisches Patentamt
European Patent Office
Office européen des brevets

(11) Veröffentlichungsnummer: **0 100 036**
**B1**

# (12) EUROPÄISCHE PATENTSCHRIFT

(45) Veröffentlichungstag der Patentschrift: **14.05.86**

(51) Int. Cl.⁴: **C 08 C 19/00,** C 10 G 33/04

(21) Anmeldenummer: **83106950.5**

(22) Anmeldetag: **15.07.83**

(54) **Organosiliciummodifizierte Polydiene, Verfahren zu ihrer Herstellung und ihre Verwendung als Dismulgatoren für Erdöl.**

(30) Priorität: **28.07.82 DE 3228135**

(43) Veröffentlichungstag der Anmeldung: **08.02.84 Patentblatt 84/6**

(45) Bekanntmachung des Hinweises auf die Patenterteilung: **14.05.86 Patentblatt 86/20**

(84) Benannte Vertragsstaaten: **BE DE FR GB NL**

(56) Entgegenhaltungen:
**DE - A - 2 321 557**
**US - A - 3 470 226**

(73) Patentinhaber: **Th. Goldschmidt AG, Goldschmidtstrasse 100 Postfach 101461, D-4300 Essen 1 (DE)**

(72) Erfinder: **Koerner, Götz, Dr., Kantorie 126, D-4300 Essen (DE)**
Erfinder: **Weitemeyer, Christian, Dr., Schellstrasse 50, D-4300 Essen (DE)**

**EP 0 100 036 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Ein grosser Teil des Roherdöls enthält bei der Förderung kleinere oder grössere Mengen Salzwasser in emulgierter Form. Derartige Emulsionen, welche vorwiegend als Wasser/Öl-Emulsionen auftreten, müssen in ihre Phasen zerlegt werden, da das in der Emulsion enthaltene Salzwasser bei der Weiterverarbeitung des Erdöls, insbesondere beim Transport und bei der Destillation, stören würde.

Die Trennung solcher Roherdölemulsionen gelingt entweder durch Absitzenlassen, Wärmebehandlungen, Zentrifugieren, durch Anlegen elektrischer Felder oder durch den Zusatz von Dismulgatoren, bzw. die Kombination mehrerer Methoden.

Die geförderten Roherdölemulsionen sind meist zu stabil, als dass sie allein durch Sedimentation, Filtrieren, Zentrifugieren oder Erhitzen gebrochen werden können. Dagegen bewirken Dismulgatoren zum Teil schon in geringen Konzentrationen ein Trennen der Emulsion.

Dismulgatoren sind bereits in grosser Zahl vorgeschlagen worden. Dies hat seinen Grund nicht zuletzt darin, dass die verschiedenen Erdöle unterschiedliche Zusammensetzungen haben und Dismulgatoren, welche zum Brechen von Emulsionen von Erdölen der einen Provenienz geeignet sind, bei Erdölemulsionen anderer Förderungsorte ungeeignet sind. Die bekannten Dismulgatoren wirken daher mehr oder weniger ausgeprägt spezifisch auf die einzelnen Erdöle.

Als Dismulgatoren hat man bereits Alkylsulfate und Alkylarylsulfonate sowie Petroleumsulfonate in Form der Aminsalze vorgeschlagen. Des weiteren wurden Anlagerungsprodukte des Ethylenoxids an geeignete Verbindungen mit aktivem Wasserstoffatom, wie z.B. Alkylphenole, Rizinusöl, Fettsäuren, Fettalkohole und Aldehydharze, erwähnt. Entsprechende Angaben finden sich z.B. in dem Buch «Oberflächenaktive Anlagerungsprodukte des Ethylenoxids» von N. Schönfeld, Wissenschaftliche Verlagsgesellschaft mbH, Stuttgart, 1959, Seite 295.

In der DE-PS 1 937 130 wird beschrieben, dass bestimmte bekannte Polyoxyalkylen-Polysiloxan-Blockmischpolymerisate hervorragende Eigenschaften als Dismulgatoren für Erdölemulsionen des Typs Wasser/Öl der verschiedensten Provenienzen haben und darüber hinaus in sehr geringen Mengen, d.h. in geringeren Mengen als die Produkte des Standes der Technik, dismulgierend wirken. Die Polyoxyalkylen-Polysiloxan-Blockmischpolymerisate haben Polyoxyalkylenblöcke eines Molgewichtes von 500 bis 4000, die aus Polyoxyethylen-, Polyoxypropylenblöcken im Gewichtsverhältnis von 40 : 60 bis 100 : 0 bestehen. Die Polysiloxanblöcke weisen 3 bis 50 Siliciumatome je Block auf.

Gegenstand der DE-PS 2 250 920 sind Mischungen von 0,2 bis 30 Gew.-% der vorgenannten Polyoxyalkylen-Polysiloxan-Blockmischpolymerisate mit 70 bis 99,8 Gew.-% siliciumfreien Dismulgatoren, welche aus Alkylenoxidanlagerungsprodukten an reaktionsfähige Wasserstoffatome enthaltende organische Verbindungen bestehen. Es kommen dabei vor allem in Betracht: Umsetzungsprodukte von Alkylenoxiden mit Alkylphenolaldehydharzen; Block- und Mischpolymerisate aus Propylenoxid und Ethylenoxid; deren Umsetzungsprodukte mit Dicarbonsäuren oder Diisocyanaten sowie Mischungen dieser Produkte. Dabei wurde festgestellt, dass die Gemische gemäss DE-PS 2 250 920 besonders günstige Eigenschaften in bezug auf Dismulgierung und gleichzeitige Schaumverhinderung haben.

Aus der DE-PS 2 321 557 sind siliciumhaltige Blockcopolymerisate auf Basis organosiliciummodifizierter Polydiene bekannt. Diese Verbindungen werden dadurch erhalten, dass man an Polydiene Wasserstoffreste enthaltende Silane addiert, wobei die Silane zusätzlich Halogen-, Alkoxy- oder Acyloxyreste aufweisen, die dann mit Polyethern umgesetzt werden. Diese Verbindungen sind vielseitig anwendbar. Sie sind Zusatzmittel bei der Herstellung von Polyurethanschäumen; sie eignen sich als Trennmittel; sie können als Präparationsmittel in der Textilindustrie verwendet oder in der Kosmetik eingesetzt werden. Als weiterer Verwendungszweck ist der Einsatz der Verbindungen als Dismulgatoren zur Trennung von Erdöl/Wasser-Emulsionen genannt.

Aus der DE-OS 1 620 934 ist ein Verfahren zur Herstellung von Organosiliciumpolymerisaten, die ein Polybutadien aufweisen, das in der Kette wenigstens eine Einheit der folgenden allgemeinen Formel enthält:

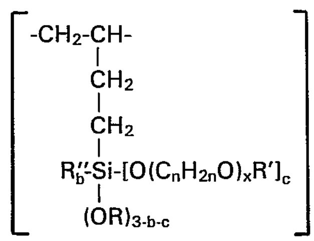

worin R und R'' Hydrocarbylreste oder substituierte Hydrocarbylreste, R' ein Hydrocarbylrest oder substituierter Hydrocarbylrest oder eine Acylgruppe, b die Zahl 0, 1 oder 2, c die Zahl 1, 2 oder 3, b + c nicht grösser als 3, n die Zahl 2, 3 oder 4 und x eine ganze Zahl von 1 bis 100 sind, bekannt, welches dadurch gekennzeichnet ist, dass man ein niedrigmolekulares Polybutadien mit einer Verbindung der allgemeinen Formel

$$HSiR''_bX_{3-b}$$

umsetzt, worin R'' und b die oben angegebenen Bedeutungen besitzen und X ein Halogenatom oder eine Gruppe OR darstellt, wobei R die oben angegebene Bedeutung besitzt, und anschliessend das Produkt mit einem Monohydroxypolyoxyalkylenether umsetzt. Die nach dem Verfahren dieser DE-OS hergestellten Verbindungen haben oberflächenaktive Eigenschaften und werden als Zusatzmittel für die Herstellung von Polyurethanschäumen empfohlen.

Überraschenderweise wurde nun gefunden, dass Verbindungen, welche den Verfahrensprodukten der DE-OS 1 620 934 ähnlich aufgebaut sind, bei Einhaltung bestimmter Bedingungen, durch die sie sich von den vorgenannten Verbindungen unterscheiden, eine wesentlich verbesserte tensidische Wirkung haben und insbesondere zur Dismulgierung von Lagerstättenwasser enthaltendem Erdöl eignen, wobei das

Lagerstättenwasser zusätzlich wechselnde Mengen Salze gelöst enthalten kann.

Die erfindungsgemässen Verbindungen entsprechen der allgemeinen Formel

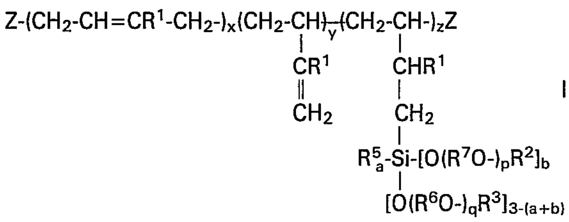

I

worin

| | |
|---|---|
| Z | kettenbegrenzende Gruppen, |
| $R^1$ | ein Wasserstoff- oder Methylrest, |
| $R^2$, $R^3$, $R^4$ | ein niederer Alkylrest mit 1 bis 4 Kohlenstoffatomen ist, der innerhalb des polymeren Moleküls gleich oder verschieden sein kann, |
| $R^5$ | ein Methylrest oder die Gruppe $[O\text{-}(R^8O)_s\text{-}R^4]$, |
| $R^6$, $R^7$, $R^8$ | Alkylenreste mit 2 bis 4 Kohlenstoffatomen, |
| a | $= 0$ bis 2, |
| $0 < b < 3$, | wobei $0 < a+b < 3$ ist |
| p, q, s | $\geqq 2$, |
| x, y | $\geqq 0$, |
| z | $\geqq 3$ |

sind, und wobei das C : O Verhältnis von $R^6O$ 2,25 bis 3 : 1, das C : O Verhältnis von $R^7O$ 2 bis 2,75 : 1, das C : O Verhältnis von $R^8O$ 2 bis 3 : 1, die Differenz des C : O Verhältnisses von $R^6O$ und $R^7O \geqq 0{,}25$ und das C : O Verhältnis von $R^8O <$ als das von $R^7O$ oder $>$ als das von $R^6O$ ist.

Beispiele für von endbegrenzenden Gruppen Z sind -H, $CH_2{=}CH\text{-}CH_2\text{-}CH_2\text{-}$, $\text{-}CH_2\text{-}CH_2\text{-}OH$, -COOH, $\text{-}CH_3$, $\text{-}C_4H_9$, $\text{-}C_6H_5$, $\text{-}CH_2\text{-}C_6H_5$, $\text{-}Si(CH_3)_3$. Diese Gruppen sind herstellungsbedingt.

Die Reste $R^2$, $R^3$ und $R^4$ können gegebenenfalls verzweigt oder auch ungesättigt sein.

Das Wesen vorliegender Erfindung besteht somit insbesondere darin, dass an die Siliciumatome, welche sich in den Seitenästen des polymeren Moleküls befinden, nicht ein einziger Typ eines Polyoxyalkylenblocks, sondern mindestens zwei verschiedene Typen von Polyoxyalkylenblöcken gebunden sind. Diese Polyoxyalkylenblöcke unterscheiden sich in ihrem hydrophilen bzw. hydrophoben Charakter. Ihre Hydrophilie bzw. Hydrophobie wird durch das C : O Verhältnis des Oxyalkylenblocks bestimmt. Da die Polyoxyalkylenblöcke aus Oxyalkyleneinheiten mit 2 bis 4 Kohlenstoffatomen, vorzugsweise aus Oxyethylen- und/oder Oxypropyleneinheiten aufgebaut sind, bedingt ein niedrigerer Wert des C : O Verhältnisses einen hydrophileren, ein höherer Wert des C : O Verhältnisses einen hydrophoberen Charakter. Ist der Wert des C : O Verhältnisses 2, bedeutet dies, dass der Polyoxyalkylenblock ausschliesslich aus Oxyethyleneinheiten besteht. Ist der Wert $> 2$, bedeutet dies, dass entsprechend dem Verhältniswert Anteile an Oxypropylen- und gegebenenfalls Oxybutyleneinheiten enthalten sind.

Durch die Bedingung, dass die Differenz des C : O Verhältnisses von $R^6O$ und $R^7O \geqq 0{,}25$ sein muss, ist der mit $R^7O$ bezeichnete Oxyalkylenblock immer hydrophiler, als der mit $R^6O$ bezeichnete Polyoxyalkylenblock. Somit sind im mittleren polymeren Molekül relativ hydrophile Polyoxyalkylenblöcke neben relativ hydrophoben Polyoxyalkylenblöcken vorhanden. Hierdurch werden die besonderen tensidischen Eigenschaften der erfindungsgemässen modifizierten Polydiene verursacht.

Es ist dem Fachmann klar, dass die Polyoxyalkylenblöcke jeweils, bedingt durch ihre Herstellung und den verwendeten Katalysator, Gemische unterschiedlicher Kettenlänge sind. Entscheidend ist jedoch die Bedingung, dass sich das C : O Verhältnis der beiden Polyoxyalkylenblöcke durch mindestens den Wert von 0,25 voneinander unterscheiden muss. Diese Bedingung ist auch einzuhalten, wenn der Fachmann den Block $R^6O$ bzw. $R^7O$ aus einem Gemisch mehrerer Polyoxyalkylenblöcke bildet.

Die Mindestdifferenz der C : O Verhältnisse von $R^6O$ und $R^7O$ beträgt definitionsgemäss 0,25. Je höher das C : O Verhältnis von $R^6O$ ist, um so vorteilhafter ist es, die Differenz des C : O Verhältnisses von $R^6O$ und $R^7O$ grösser zu wählen. Ist das C : O Verhältnis von $R^6O$ 3, kann das C : O Verhältnis von $R^7O$ höchstens 2,75 sein. Es wird vorzugsweise jedoch kleiner sein und z.B. den Wert von 2,5 annehmen.

Die erfindungsgemässen Verbindungen können mehr als zwei Polyoxyalkylenblöcke enthalten, da der Substituent $R^5$ die Gruppe $[O\text{-}(R^8O\text{-})_s\text{-}R^4]$ sein kann. Da definitionsgemäss das C : O Verhältnis von $R^8O$ kleiner als das von $R^7O$ oder grösser als das von $R^6O$ sein muss, bleibt der unterschiedliche hydrophile Charakter der beiden anderen Polyoxyalkylenblöcke erhalten. Ist das C : O Verhältnis von $R^7O = 2$ und das C : O Verhältnis von $R^6O = 2{,}25$, muss das C : O Verhältnis von $R^8O > 2{,}25$ sein. Ist z.B. das C : O Verhältnis von $R^7O = 2{,}5$ und dasjenige von $R^6O = 2{,}8$, kann das C : O Verhältnis von $R^8O < 2{,}3$ oder $> 2{,}8$ sein.

Die Oxyalkyleneinheiten, welche den Polyoxyalkylenblock bilden, können statistisch verteilt oder blockartig angeordnet sein.

Bevorzugt sind Verbindungen, bei denen die unsubstituierten Doppelbindungen aufweisenden und mit den Indices x und y bezeichneten Einheiten in einer Menge von 25 bis 80 Mol.-% der Summe der Einheiten x+y+z vorliegen.

Beispiele erfindungsgemässer Verbindungen sind:

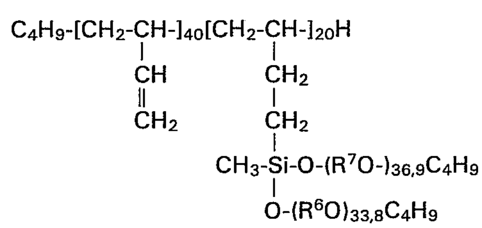

C : O Verhältnis $R^6O = 2{,}5 : 1$

C : O Verhältnis $R^7O = 2{,}2 : 1$

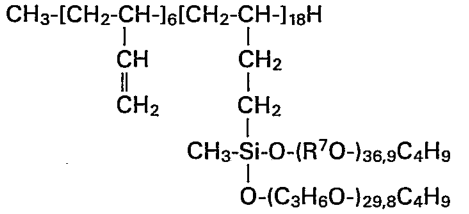

C : O Verhältnis $R^6O$ = 3 : 1
C : O Verhältnis $R^7O$ = 2,2 : 1

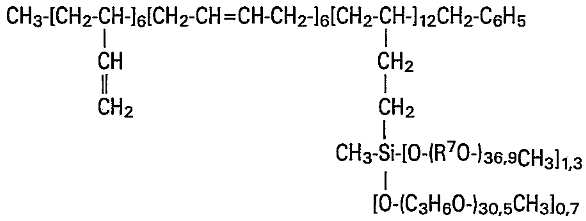

C : O Verhältnis $R^6O$ = 3 : 1
C : O Verhältnis $R^7O$ = 2,2 : 1

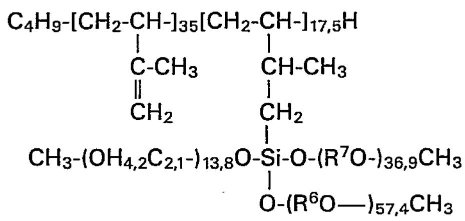

C : O Verhältnis $R^6O$ = 2,5 : 1
C : O Verhältnis $R^7O$ = 2,2 : 1

Die erfindungsgemässen neuen Verbindungen der Formel

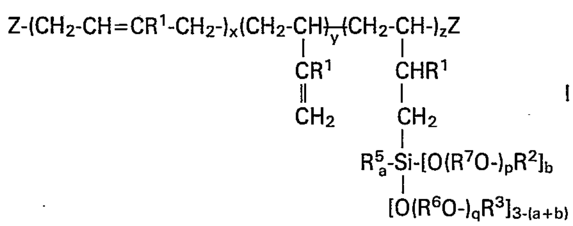

I

können in einer weiteren Ausgestaltung der Erfindung dadurch hergestellt werden, dass man mindestens z Mol Silane der allgemeinen Formel

$$(CH_3)_aSiHX_{3-a} \qquad II$$

wobei X ein Halogen-, Alkoxy- oder Acyloxyrest ist, in an sich bekannter Weise an Polydiene der allgemeinen Formel

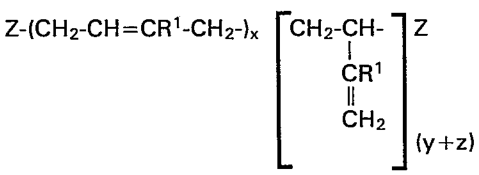

III

welche ein Molgewicht von 300 bis 200.000 aufweisen, in Gegenwart von Edelmetallkatalysatoren anlagert und die erhaltenen Anlagerungsprodukte mit einem Gemisch, welches b · z Mol eines gegebenenfalls trimethylsilylierten Polyoxyalkylenmonools der Formel

$$HO(R^7O-)_pR^2 \qquad IV$$

und (3-a-b)z Mol eines gegebenenfalls trimethylsilylierten Polyoxyalkylenmonools der Formel

$$HO(R^6O-)_qR^3 \qquad V$$

und gegebenenfalls a · z Mol eines Polyoxyalkylenmonools der Formel

$$HO(R^8O-)_sR^4 \qquad VI$$

enthält, oder mit diesen gegebenenfalls trimethylsilylierten Polyoxyalkylenmonoolen nacheinander in an sich bekannter Weise umsetzt.

Die vorgenannten Reste $R^1$, $R^2$, $R^3$, $R^4$, $R^5$, $R^6$, $R^7$, $R^8$ und Z sowie die Indizes a, b, p, q, s, x, y und z haben die bereits erwähnte Bedeutung.

Die Durchführung des erfindungsgemässen Verfahrens läuft analog dem Verfahren ab, wie es z.B. in der DE-PS 2 321 557 beschrieben ist. Als Katalysatoren für die Anlagerung der Silane der Formel II an die Polydiene der Formel III werden insbesondere Platinkatalysatoren, wie z.B. Hexachloroplatinsäure oder Platinethylenpyridindichlorid, verwendet. Die Reaktion wird zweckmässig in Gegenwart eines Lösungsmittels, insbesondere Toluol, durchgeführt. Die Anlagerung des Silans an das Polydien erfolgt vorzugsweise bei erhöhten Temperaturen, z.B. beim Siedepunkt des Toluols.

Die erhaltenen Zwischenprodukte werden nun mit den im Vorstehenden angegebenen Mengen an Polyoxyalkylenmonoolen der Formeln IV, V und gegebenenfalls VI entweder in Form ihres Gemisches oder nacheinander umgesetzt. Die Umsetzung erfolgt zweckmässig ebenfalls in Anwesenheit eines Lösungsmittels, wobei wiederum Toluol bevorzugt ist. Es können jedoch auch andere inerte Lösungsmittel, wie z.B. Methylenchlorid, Glykolether oder cyclische Ether verwendet werden. Hat X die Bedeutung eines Halogenrestes, wird der freigesetzte Halogenwasserstoff zweckmässig mit Ammoniak abgefangen. Anstelle des Ammoniaks kann auch Amin verwendet werden. In ähnlicher Weise kann, wenn X die Bedeutung eines Acyloxyrestes hat, die freigesetzte Carbonsäure neutralisiert werden. Hat X die Bedeutung eines Alkoxyrestes, so empfiehlt es sich, den freigesetzten, niedermolekularen Alkohol aus dem Reaktionsgemisch destillativ zu entfernen. Aus diesem Grunde ist es auch bevorzugt, als Alkoxyrest den Methoxy- oder Ethoxyrest zu verwenden.

In einem weiteren erfindungsgemäss ausgestalteten Verfahren, das besonders bei schwer zu trocknenden Polyoxyalkylenverbindungen Verwendung findet, werden die Polyoxyalkylenmonoole der Formeln IV und V sowie gegebenenfalls VI vor ihrer Umsetzung mit Anlagerungsprodukten aus Verbindungen der Formeln II und III mit mehr als molaren Mengen von Trimethylchlorsilan versetzt. Dabei wird anwesenden Wasser in Hexamethylsiloxan und HCl umgewandelt und die OH-Gruppen der Monoole der

Formeln IV und V sowie gegebenenfalls VI trimethylsilyliert. Die abschliessende Umsetzung zu den beanspruchten Verbindungen der Formel I erfolgt sodann unter Abspaltung einer Trimethylsilylverbindung.

Die erfindungsgemässen Produkte werden als Dismulgiermittel für Erdöl/Wasser-Emulsionen vorzugsweise in Mengen von 1 bis 300 ppm dem rohen, Wasser enthaltenden Erdöl zugesetzt. Es ist auch möglich, die erfindungsgemässen Verbindungen in einem Lösungsmittel, wie z.B. Toluol, zu lösen und die Lösung dem Erdöl zuzusetzen. Die Verbindungen führen zu einer raschen und weitgehend vollständigen Trennung des Wassers vom Rohöl. Die Verbindungen stören bei der weiteren Aufarbeitung des Öles nicht und führen insbesondere nicht zu Schaumproblemen bei der Destillation und Aufarbeitung des Öles.

Es ist dem Fachmann verständlich, dass die erfindungsgemässen Verbindungen, ähnlich wie in der DE-PS 2 321 557 beschrieben, auch für andere Zwecke, z.B. als Mittel zur Zellregulierung von Polyurethanschäumen, als Trennmittel, als Präparationsmittel in der Textilindustrie und für kosmetische Zwecke eingesetzt werden können. Ganz allgemein können die Produkte dort eingesetzt werden, wo die Erniedrigung der Oberflächenspannung, insbesondere des Wassers, von Bedeutung ist.

In den folgenden Beispielen wird die Herstellung der erfindungsgemässen Verbindungen näher erläutert, und es werden deren anwendungstechnische Eigenschaften gezeigt.

*Beispiel 1*

54 g Polybutadien mit einem Molekulargewicht von 1200 und einem Vinylgruppengehalt von > 85 Mol.-% werden in der gleichen Menge Toluol gelöst und mit 10,8 mg Platinethylenpyridindichlorid versetzt. Dazu werden bei 100°C 69 g Methyldichlorsilan getropft und weitere 3 Stunden bei 100°C gehalten. Anschliessend werden im Vakuum bis 80°C die flüchtigen Verbindungen abdestilliert. Man erhält 119 g einer braunen, hochviskosen Substanz mit einem Säurewert von 9,53 mval Säure/g entsprechend einem Umsatz von 0,57 Butadieneinheiten.

1890 g einer 1 : 1 Mischung der Polyalkylenmonoole $C_4H_9$-(O-$R^7$)$_{36,9}$OH und $C_4H_9$-(O-$R^6$)$_{33,8}$OH (C : O Verhältnis von $R^7O$ = 2,2 : 1; von $R^6O$ = 2,5 : 1) werden in 1890 g Toluol gelöst und mit 111 g Triethylamin sowie 210 g einer 50%igen Lösung des vorher hergestellten Polybutadien-Methyldichlorsilan-Addukts in Toluol versetzt. Die Mischung wird erwärmt und 4 Stunden unter Rückfluss gehalten, dann filtriert, bei 80°C im Vakuum von flüchtigen Bestandteilen befreit und nochmals filtriert. Man erhält 1750 g einer gelblichen Flüssigkeit mit einer Viskosität von 5400 mPas bei 25°C, die im Gel-permeations-Chromatogramm nur geringe Anteile an freiem Polyether zeigt und im wesentlichen aus einer hochmolekularen Substanz (Peak-Molekulargewicht 43.000, Basis Polystyrol) der im Anspruch angegegeben Formel besteht. Die Formel wird verifiziert durch folgende analytische Daten:

Elementaranalyse:

| | | |
|---|---|---|
| gefunden: | Si 0,6% | C 59,0% |
| berechnet: | Si 0,7% | C 58,4% |

Charakteristische IR-Banden:

| | |
|---|---|
| Si-O-C | 1090 $cm^{-1}$ |
| Si-$CH_3$ | 1255 $cm^{-1}$ |
| Vinyl | 910 $cm^{-1}$ |

Jodzahl: 6 $\left[\frac{g/2 \cdot 100}{g\ Substanz}\right]$

*Beispiel 2*

Wie in Beispiel 1 werden 54 g eines Polybutadiens mit einem Molekulargewicht von 3000 und einem Vinylgruppengehalt von > 90% mit 4,8 mg Platinethylenpyridindichlorid und 37,9 g Methyldichlorsilan zu 87 g eines Produktes umgesetzt, das 6,6 mval Säure/g enthält, was einer Umsetzung von 0,29 Butadieneinheiten des Polybutadiens entspricht.

Man verfährt weiter analog zu Beispiel 1, indem man als Polyethermischung 945 g von $C_4H_9$-(O-$R^7$)$_{36,9}$OH und $C_4H_9$-(O-$R^6$)$_{29,8}$OH (C : O Verhältnis von $R^7O$ = 2,2 : 1; von $R^6O$ = 3 : 1) im Verhältnis 3 : 1 mit 152 g einer 50%igen Lösung des vorher hergestellten Polybutadien-Methyldichlorsilan-Addukts in Toluol umsetzt. Man erhält 911 g einer gelblichen Flüssigkeit mit einer Viskosität von 6830 mPas, die im GPC nur geringe Anteile an freiem Polyether zeigt und im wesentlichen aus einer hochmolekularen Substanz (PMG 57.000) der im Anspruch angegebenen Formel besteht. Die wird verifiziert durch folgende analytische Daten.

Elementaranalyse:

| | | |
|---|---|---|
| gefunden: | Si 0,6% | C 59,8% |
| berechnet: | Si 0,7% | C 59,4% |

Charakteristische IR-Banden:

| | |
|---|---|
| Si-O-C | 1090 $cm^{-1}$ |
| Si-$CH_3$ | 1255 $cm^{-1}$ |
| Vinyl | 910 $cm^{-1}$ |

Jodzahl: 16

*Beispiel 3*

Es wird analog zu Beispiel 2 verfahren mit dem Unterschied, dass als Polyethermischung 682 g von $C_4H_9$-(O-$R^7$)$_{36,9}$OH und $C_4H_9$-(O-$R^6$)$_{12,5}$OH (C : O Verhältnis von $R^7O$ = 2,2 : 1; von $R^6O$ = 3 : 1) molar 1 : 1 verwendet werden.

Ausbeute: 659 g
PMG: 43.000

Elementaranalyse:

| | | |
|---|---|---|
| gefunden: | Si 0,8% | C 60,1% |
| berechnet: | Si 1,0% | C 60,0% |

IR-Banden wie in Beispiel 2

Jodzahl: 21

*Beispiel 4*

Es werden 54 g eines Polybutadiens mit einem Molekulargewicht von 151.000 und > 90% Vinylgruppengehalt als 10%ige Lösung in Toluol mit 36,3 mg Platinethylenpyridindichlorid und 57,5 g Methyldichlorsilan 2 Stunde bei 70°c umgesetzt. Anschliessend werden 5 mal je 100 ml Methylenchlorid zugesetzt und bei Normaldruck abdestilliert, um unumgesetztes Methyldichlorsilan zu entfernen. Die erhaltene toluolische Lösung wird zu 5,7 mval Säure/g Festsubstanz titriert, was einer Umsetzung von 0,23 Butadieneinheiten entspricht.

80 g dieser Verbindung werden mit 865 g der gleichen Polyethermischung und unter gleichen Bedingungen wie in Beispiel 1 zur Reaktion gebracht. Man erhält 811 g einer gelbbraunen hochviskosen Flüssigkeit mit folgenden analytischen Daten:

Elementaranalyse:

| | | |
|---|---|---|
| gefunden: | Si 0,6% | C 60,0% |
| berechnet: | Si 0,7% | C 59,5% |

IR-Banden wie in Beispiel 2

Jodzahl: 19

*Beispiel 5*

6,8 g eines Polyisoprens vom Molekulargewicht 36.000 mit mehr als 90% 3,4-Einheiten, das aus Isopren und Butyllithium hergestellt wurde, werden mit 5,8 g Methyldichlorsilan und 3,9 mg Hexachloroplatinsäure als 20%ige Lösung in Toluol in einem Druckgefäss abgeschlossen und 8 Stunden auf 70°C erhitzt. Nach dem Entfernen flüchtiger Bestandteile bei Normaldruck erhält man 11,3 g einer dunklen, hochviskosen Substanz mit einem Säurewert von 6,9 mval Säure/g entsprechend einem Umsatz von 0,39 Isopreneinheiten.

11,3 g dieser Verbindung werden mit 140 g der gleichen Polyethermischung und unter gleichen Bedingungen wie in Beispiel 1 zur Reaktion gebracht. Man erhält 108 g einer braunen Flüssigkeit mit einer Viskosität von 12.370 mPas, die im Gel-Permeations-Chromatogramm nur geringe Anteile an unumgesetztem Poyether zeigt und im wesentlichen aus einer hochmolekularen Substanz der im Anspruch angegebenen Formel besteht. Die Formel wird verifiziert durch folgende analytische Daten:

Elementaranalyse:

| | | |
|---|---|---|
| gefunden: | Si 0,5% | C 59,4% |
| berechnet: | Si 0,7% | C 59,0% |

Charakteristische IR-Banden:

| | |
|---|---|
| Si-O-C | 1090 $cm^{-1}$ |
| $Si-CH_3$ | 1255 $cm^{-1}$ |
| Methylvinyl | 890 $cm^{-1}$ |

Jodzahl: 11

*Beispiel 6*

54 g Polybutadien des Beispiels 2 werden mit 22 mg Platinethylenpyridindichlorid und 57,4 g Triethoxysilan in Toluol bei 100°C umgesetzt. Das Produkt hat einen Ethoxywert von 41,4%, was einer Umsetzung von 0,33 Butadieneinheiten entspricht.

103 g dieser Verbindung werden mit 350 g $C_4H_9-(O-R^7)_{13,8}OH$ und 250 g $C_4H_9-(O-R^6)_{7,7}OH$ (C : O Verhältnis von $R^6O$ = 2,8 : 1; von $R^7O$ = 2,1 : 1) als 50%ige toluolische Lösung sowie 0,7 g Butyltitanat versetzt, 1 Stunde unter Rückfluss erhitzt und dann zunächst bei Normaldruck, später im Vakuum, von flüchtigen Bestandteilen befreit. Man erhält 514 g einer gelblichen Flüssigkeit mit folgenden analytischen Daten:

Elementaranalyse:

| | | |
|---|---|---|
| gefunden: | Si 1,2% | C 60,9% |
| berechnet: | Si 1,4% | C 60,3% |

IR-Banden wie in Beispiel 2, ohne $Si-CH_3$

Jodzahl: 25

*Beispiel 7*

Je 36 g $C_4H_9-(O-R^7)_{36,9}OH$ und $C_4H_9-(O-R^6)_{33,8}OH$ (C : O Verhältnis von $R^6O$ = 2,5 : 1; von $R^7O$ = 2,2 : 1) werden in 110 g Toluol azeotrop andestilliert. Nach dem Abkühlen werden 17,4 g Trimethylchlorsilan zugegeben, 1 Stunde bei Rückfluss gekocht und im Wasserstrahlvakuum bei 100°C die Flüchtigen entfernt.

Zu der zurückbleibenden Flüssigkeit werden 5,8 g des Polybutadien-Methyldichlorsilan-Addukts aus Beispiel 2, in 50 ml Toluol gelöst, sowie 0,6 g Dodecylbenzolsulfonsäure gegeben. Anschliessend wird im Vakuum auf 100°C erhitzt bis kein Destillat mehr übergeht, mit 100 ml Toluol verdünnt und nach Zugabe von 1,7 g Triethylamin filtriert. Das lösungsmittelfreie, hochviskose Produkt (57 g) ist schwach gelblich gefärbt und hat ein PMG von 65.000 bei etwas breiterer Molekulargewichtsverteilung als die nach dem Verfahren der Beispiele 1 bis 6 hergestellten Verbindungen.

Elementaranalyse:

| | | |
|---|---|---|
| gefunden: | Si 0,9% | C 58,7% |
| berechnet: | Si 0,7% | C 59,1% |

IR-Banden wie in Beispiel 2

*Vergleichsbeispiele 8 bis 10*

Nach der Lehre der DE-PS 2 321 557 wurden zum Vergleich die Polyether $C_4H_9-(O-R^7)_{36,9}OH$, $C_4H_9-(O-R^6)_{33,8}OH$ und $C_4H_9-(O-R^8)_{31}OH$ (C : O Verhältnis von $R^6O$ = 2,5 : 1, von $R^7O$ = 2,2 : 1; von $R^8O$ = 3 : 1) jeweils allein mit dem Polybutadien-Methyldichlorsilan-Addukt aus Beispiel 2 analog umgesetzt.

*Dismulgierversuche*

Die Verbindungen der Beispiele 1 bis 10 wurden in einem deutschen Rohöl mit 48% Wassergehalt auf ihre Wirkung hin überprüft. Dafür wurden je 20 ppm der verschiedenen Substanzen zu je 50 ml Rohöl in ein kalibriertes Schauglas gegeben und die abgeschiedene Menge Wasser in ml nach bestimmten Zeiten festgehalten. Die Temperatur wurde während des gesamten Versuchs konstant auf 50°C gehalten.

In der nachstehend aufgeführten Tabelle sind die Beispiele 8 bis 10 nicht erfindungsgemäss. Die zur Herstellung der Produkte eingesetzten Polyether selbst sind, auch in Mischungen, bestenfalls nur sehr schwach wirksam und werden daher nicht gezeigt.

Abgeschiedenes Wasser (ml) nach

| | | 0,5 h | 1 h | 2 h | 3 h |
|---|---|---|---|---|---|
| ERFINDUNGSGEMÄSS | Beispiel 1 | 20 | 22 | 22 | 23 |
| | Beispiel 2 | 18 | 21 | 22 | 22 |
| | Beispiel 3 | 18 | 20 | 20 | 21 |
| | Beispiel 4 | 18 | 19 | 21 | 21 |
| | Beispiel 5 | 20 | 20 | 20 | 22 |
| | Beispiel 6 | 19 | 20 | 21 | 21 |
| | Beispiel 7 | 18 | 21 | 21 | 22 |
| NICHT ERFINDUNGS-GEMÄSS | Beispiel 8 | 2 | 3 | 7 | 9 |
| | Beispiel 9 | 3 | 4 | 9 | 13 |
| | Beispiel 10 | 0 | 0 | 0 | 0 |

Aus dem Vergleich der Dismulgatoren nach den Beispielen 1 bis 7 mit den nicht erfindungsgemässen der Beispiele 8 bis 10 geht hervor, dass die Anwesenheit zweier, im hydrophilen bzw. hydrophoben Charakter deutlich verschiedener Polyether in organosiliciummodifizierten Polydienen zu einer wesentlich verbesserten Dismulgierung von Rohöl führt.

## Patentansprüche

1. Organosiliciummodifizierte Polydiene der allgemeinen Formel

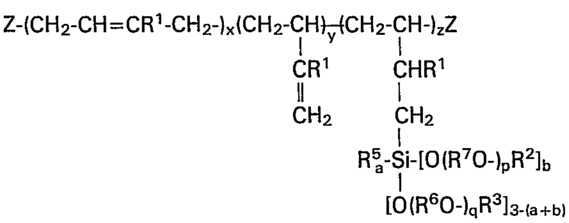

worin

Z kettenbegrenzende Gruppen,

$R^1$ ein Wasserstoff- oder Methylrest,

$R^2$, $R^3$, $R^4$ ein niederer Alkylrest mit 1 bis 4 Kohlenstoffatomen ist, der innerhalb des polymeren Moleküls gleich oder verschieden sein kann,

$R^5$ ein Methylrest oder die Gruppe $[O-(R^8O)_s-R^4]$,

$R^6$, $R^7$, $R^8$ Alkylenreste mit 2 bis 4 Kohlenstoffatomen,

a $= 0$ bis 2,

$0 < b < 3$, wobei $0 < a+b < 3$ ist,

p, q, s $\geqq 2$,

x, y $\geqq 0$,

z $\geqq 3$

sind, und wobei das C : O Verhältnis von $R^6O$ 2,25 bis 3 : 1, das C : O Verhältnis von $R^7O$ 2 bis 2,75 : 1, das C : O Verhältnis von $R^8O$ 2 bis 3 : 1, die Differenz des C : O Verhältnisses von $R^6O$ und $R^7O \geqq 0,25$ und das C : O Verhältnis von $R^8O <$ als das von $R^7O$ oder $>$ als das von $R^6O$ ist.

2. Verbindungen nach Anspruch 1, dadurch gekennzeichnet, dass $\Sigma$ x + y 25 bis 80 Mol.-% von $\Sigma$ x + y + z ist.

3. Verfahren zur Herstellung von Verbindungen der Ansprüche 1 oder 2, dadurch gekennzeichnet, dass man mindestens z Mol Silane der allgemeinen Formel

$$(CH_3)_aSiHX_{3-a} \qquad II$$

wobei X ein Halogen-, Alkoxy- oder Acyloxyrest ist, in an sich bekannter Weise an Polydiene der allgemeinen Formel

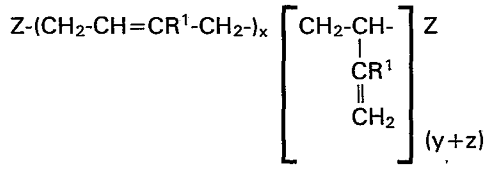

III

welche ein Molgewicht von 300 bis 200.000 aufweisen, in Gegenwart von Edelmetallkatalysatoren anlagert und die erhaltenen Anlagerungsprodukte mit einem Gemisch, welches b · z Mol eines Polyoxyalkylenmonools der Formel

$$HO(R^7O-)_pR^2 \qquad IV$$

und (3-a-b)z Mol eines Polyoxyalkylenmonools der Formel

$$HO(R^6O—)_qR^3 \qquad V$$

und gegebenenfalls a · z Mol eines Polyoxyalkylenmonools der Formel

$$HO(R^8O-)_sR^4 \qquad VI$$

enthält, oder mit diesen Polyoxyalkylenmonoolen nacheinander in an sich bekannter Weise umsetzt.

4. Verfahren nach Anspruch 3, dadurch gekennzeichnet, dass man anstelle der Polyoxyalkylenmonoole die Polyoxyalkylentrimethylsilylester umsetzt.

5. Verwendung der Verbindungen nach Anspruch 1 oder 2 als Dismulgatoren für Erdöl/Wasser-Emulsionen.

## Claims

1. Organosilicon-modified polydienes of the general formula

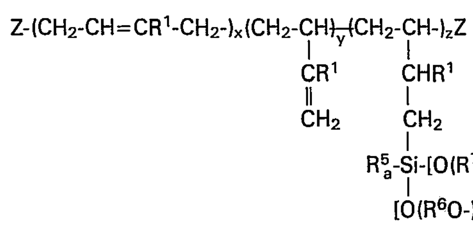

wherein

the Zs are chain-terminating groups

$R^1$ is a hydrogen atom or a methyl radical,

$R^2$, $R^3$, $R^4$ are a lower alkyl radical which has 1 to 4 carbon atoms and which, within the polymeric molecule, can be identical or different,

$R^5$ is a methyl radical or the group $[O\text{-}(R^8O)_s\text{-}R^4]$,

$R^6$, $R^7$, $R^8$ are alkylene radicals having 2 to 4 carbon atoms,

a is 0 to 2,

$0 < b < 3$, and $0 < a+b < 3$,

p, q, s $\geqq 2$,

x, y $\geqq 0$,

z $\geqq 3$

and wherein the C : O ratio of $R^6O$ is 2.25 to 3 : 1, the C : O ratio of $R^7O$ is 2 to 2.75 : 1, the C : O ratio of $R^8O$ is 2 to 3 : 1, the difference between the C : O ratios of $R^6O$ and $R^7O \geqq 0.25$ and the C : O ratio of $R^8O$ < that of $R^7O$ or > that of $R^6O$.

2. Compounds according to claim 1, characterised in that $\Sigma x + y$ is 25 to 80 mol % of $\Sigma x + y + z$.

3. Process for the preparation of compounds of claims 1 or 2, characterised in that at least z moles of silanes of the general formula

$(CH_3)_aSiHX_{3-a}$ II

wherein X is a halogen, alkoxy or acyloxy radical, are subjected, in a manner which is in itself known, in the presence of noble metal catalysts, to an addition reaction with polydienes of the general formula

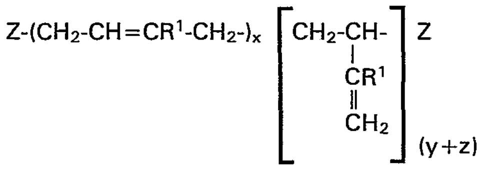

III

having a molecular weight of 300 to 200,000, and the resulting addition reaction products are reacted, in a manner which is in itself known, with a mixture which contains b · z moles of a polyoxyalkylene monool of the formula

$HO(R^7O\text{-})_pR^2$ IV

and (3-a-b)z moles of a polyoxyalkylenemonool of the formula

$HO(R^6O\text{—})_qR^3$ V

and, if appropriate, a · z moles of a polyoxyalkylenemonool of the formula

$HO(R^8O\text{-})_sR^4$ VI

or successively with these polyoxyalkylenemonools.

4. Process according to claim 3, characterised in that the polyoxyalkylene trimethylsilyl esters are reacted instead of the polyoxyalkylenemonools.

5. Use of the compounds according to claim 1 or 2 as de-emulsifiers for petroleum/water emulsions.

**Revendications**

1. Polydiènes modifiés par un composé organique du silicium, de formule générale

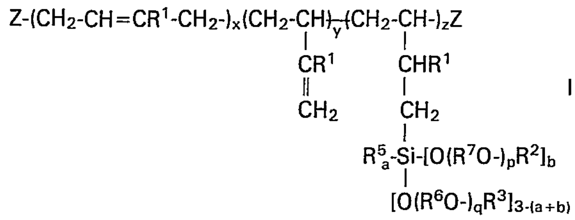

I

dans laquelle

Z représente des groupes terminaux de chaîne;

$R^1$ est un radical hydrogène ou méthyle;

$R^2$, $R^3$, $R^4$ représentent chacun un radical alkyle inférieur ayant de 1 à 4 atomes de carbone, ces radicaux pouvant être identiques ou différents à l'intérieur de la molécule polymère;

$R^5$ est un radical méthyle ou le groupe $[O\text{-}(R^8O)_s\text{-}R^4]$;

$R^6$, $R^7$, $R^8$ sont des radicaux alkylène ayant 2 à 4 atomes de carbone;

a = 0 à 2;

$0 < b < 3$, avec $0 < a+b < 3$;

p, q, s $\geqq 2$;

x, y $\geqq 0$;

z $\geqq 3$;

et où le rapport C : O de $R^6O$ est compris entre 2,25 et 3 : 1, le rapport C : O de $R^7O$ est compris entre 2 et 2,75 : 1, le rapport C : O de $R^8O$ est compris entre 2 et 3 : 1, la différence entre le rapport C : O de $R^6O$ et celui de $R^7O$ est $\geqq 0{,}25$, et le rapport C : O de $R^8O$ < à celui de $R^7O$ ou > à celui de $R^6O$.

2. Composés selon la revendication 1, caractérisés en ce que la somme de x + y est égale à 25 à 80% molaire de la somme de x + y + z.

3. Procédé pour la préparation de composés selon les revendications 1 ou 2, caractérisé en ce qu'on fixe au moins z moles de silanes de formule générale

$(CH_3)_aSiHX_{3-a}$ II

dans laquelle X est un halogène, un radical alcoxy ou acyloxy, d'une manière connue en soi, en présence de catalyseurs à base de métaux nobles, sur des polydiènes de formule générale

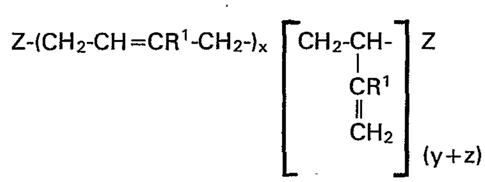

III

qui présentent une masse moléculaire de 300 à 200 000, et qu'on fait réagir d'une manière connue le produit d'addition obtenu sur un mélange contenant b · z moles d'un monool polyoxyalkylène de formule

$HO(R^7O\text{-})_pR^2$ IV

et (3-a-b)z moles d'un monool polyoxyalkyléné de formule

$$HO(R^6O—)_qR^3 \quad V$$

et éventuellement a · z moles d'un monool polyoxyalkyléné de formule

$$HO(R^8O-)_sR^4 \quad VI$$

ou bien sur ces monools polyoxyalkylénés les uns après les autres.

4. Procédé selon la revendication 3, caractérisé en ce qu'on fait réagir, à la place des monools polyoxyalkylénés des esters diméthylsilyliques polyoxyalkylénés.

5. Utilisation des composés selon la revendication 1 ou 2 en tant que désémulsionnants pour les émulsions pétrole/eau.